# FASCICULE DE BREVET EUROPEEN

(11) **EP 1 804 160 B1**
(45) Date de publication et mention de la délivrance du brevet: **04.08.2010**
(21) Numéro de dépôt: 06127367.8
(22) Date de dépôt: 29.12.2006
(51) Int. Cl.: G06F 7/72

(54) **Protection d'un calcul cryptographique effectué par un circuit intégré**
Schutz einer kryptographischen Berechnung in einem integrierten Schaltkreis
Protection of a cryptographic calculation performed by an integrated circuit

(30) Priorité: 29.12.2005 FR 0554133
(43) Date de publication de la demande: 04.07.2007
(73) Titulaire: PROTON WORLD INTERNATIONAL N.V., 1930 ZAVENTEM (BE)
(72) Inventeur: Modave, Jean-Louis, OTTIGNIES 1340 (BE); Huque, Thierry, MOXHE 4280 (BE)
(74) Mandataire: de Beaumont, Michel

(56) Documents cités:
- WO-A-99/67909
- WO-A-02/099624
- WO-A-2004/046017
- WO-A1-00/25204

## Description

### Domaine de l'invention

La présente invention concerne de façon générale les circuits électroniques et plus particulièrement les circuits intégrés comportant des éléments de calcul (logiciels et/ou matériels) mettant en oeuvre des algorithmes effectuant plusieurs opérations identiques sur un même élément d'un groupe au sens mathématique du terme. Par opération, on entend toute loi de composition de deux éléments du groupe telle que le résultat est un élément du groupe. On fera par la suite indifféremment référence au terme opération ou à l'expression loi (de composition) interne.

Un exemple d'application de la présente invention concerne les exponentiations exécutées notamment dans des calculs cryptographiques, par exemple d'un algorithme dit RSA qui est un algorithme à clé publique basé sur un calcul d'exponentiation modulaire.

Un autre exemple d'application de la présente invention concerne les opérations effectuées sur des courbes elliptiques dans des calculs cryptographiques, par exemple d'un algorithme dit de Diffie-Hellman qui est un protocole de génération de clés partagées à partir d'un échange de clés publiques.

La présente invention concerne plus particulièrement la protection d'un calcul par itérations contre des attaques par perturbations du fonctionnement du circuit électronique exécutant le calcul. De telles attaques ont par exemple pour objet de découvrir des quantités censées rester secrètes. L'invention concerne plus particulièrement les attaques dites par injection de faute.

Un exemple d'application de la présente invention concerne les cartes à puce et analogues.

### Exposé de l'art antérieur

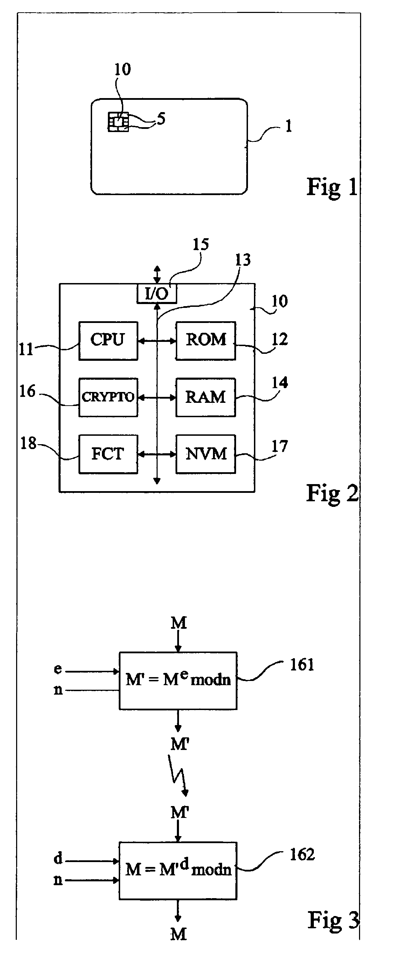

La figure 1 représente, de façon très schématique, une carte à puce 1 du type auquel s'applique à titre d'exemple la présente invention. Une telle carte est le plus souvent constituée d'un support en matière plastique sur ou dans lequel est rapportée une puce 10 de circuit intégré associée à des contacts 5 de communication avec un terminal (non représenté) et/ou à des éléments non représentés d'émission-réception radio fréquence pour une communication sans contact.

Un autre exemple d'application de la présente invention concerne les microordinateurs et plus généralement les cartes électroniques (par exemple, une carte mère d'ordinateur personnel) comportant un circuit intégré effectuant des calculs sur un groupe, par exemple à des fins de transmissions de données.

La figure 2 représente, de façon très schématique et sous forme de blocs, un exemple classique de circuit électronique 10, par exemple d'une carte à puce, auquel s'applique plus particulièrement la présente invention. Dans cet exemple, il s'agit d'un microcontrôleur comportant une unité centrale de traitement 11 (CPU) susceptible d'exécuter des programmes le plus souvent contenus dans une mémoire morte 12 (ROM) avec laquelle l'unité 11 communique au moyen d'un ou plusieurs bus 13. Le ou les bus 13 véhiculent des signaux entre les différents éléments du circuit et notamment entre l'unité centrale 11 et une ou plusieurs mémoires vives 14 (RAM) destinées à contenir des données en cours de traitement, et une interface 15 (I/O) pour communiquer avec ou sans contact avec l'extérieur du circuit 10. Dans les circuits auxquels s'applique la présente invention, une fonction de chiffrement ou de cryptographie 16 (CRYPTO) est le plus souvent réalisée de façon matérielle dans le microcontrôleur 10 et exécute au moins un calcul, par exemple d'exponentiation. Le microcontrôleur peut également comporter une zone de mémoire non volatile 17 (NVM) réinscriptible (par exemple de type EEPROM ou analogue) et d'autres fonctions (bloc 18, FCT) selon l'application, par exemple, des fonctions de calcul de parité (CRC), de génération de quantités numériques pour un algorithme de type DES, etc.

La présente invention s'applique également à des circuits intégrés plus simples se contentant d'une cellule de calcul cryptographique et d'une zone de mémoire pour stocker au moins une ou plusieurs quantités censées rester secrètes et définissant le nombre d'itérations de l'opération.

La figure 3 illustre, de façon très schématique et sous forme de blocs, un exemple classique d'algorithme RSA exploitant un calcul d'exponentiation modulaire. Un tel algorithme est décrit, par exemple, dans l'ouvrage "Handbook of Applied Cryptography" d'A. Menezes, P. Van Oorschot et S. Vanstone édité par CRC Press en 1997, et dans la norme RSA Cryptography Standard V2.1 (RSA Labs, June 14, 2002).

Un message M à chiffrer est envoyé sur une cellule 161 de chiffrement (par exemple, une partie dédiée d'un circuit intégré) qui reçoit ou contient également un exposant e et un modulo n devant être utilisés dans le calcul et qui définissent la clé publique de l'algorithme RSA. Le bloc 161 exécute le calcul M^{e} mod n et fournit le message chiffré M'.

Côté déchiffrement, une cellule 162 de calcul d'exponentiation modulaire reçoit le message M', ainsi que le modulo n (public dans le cas du RSA) et un exposant d définissant ici un élément de la clé privée du récepteur du message. Le calcul opéré est identique à celui du chiffrement. La cellule 162 exécute l'opération M^{d} mod n pour fournir le message M en clair. Les éventuelles relations que doivent respecter les nombres e, d et n pour la mise en oeuvre de l'algorithme RSA n'ont pas d'importance pour l'exposé de l'invention. En pratique, un même circuit peut comporter une seule cellule 161 ou 162 chargée avec des paramètres différents selon qu'elle chiffre ou déchiffre.

En raison de la taille des nombres manipulés, l'exponentiation est calculée par une technique dite de carré et multiplication (square and multiply) qui exploite la représentation binaire de l'exposant (e ou d) pour décomposer le calcul en une succession d'élévations au carré et de multiplications par un résultat intermédiaire précédent.

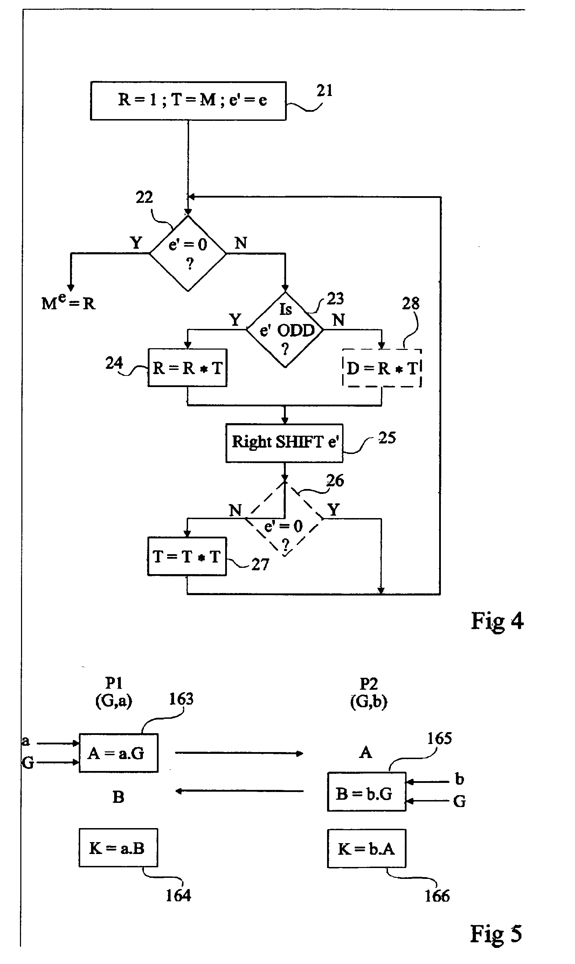

La figure 4 est un organigramme illustrant un calcul d'exponentiation par une technique classique de carré et multiplication. Le calcul, exposé sous forme d'organigramme en figure 4, est en pratique généralement effectué par une cellule matérielle (en logique câblée) mais peut également être mis en oeuvre de façon logicielle.

Une première étape (bloc 21, R=1 ; T=M ; e'=e) consiste à initialiser une variable résultat R à l'unité, une variable temporaire T comme contenant le message M et une variable d'exposant e' à la valeur de l'exposant e. Dans le cas du RSA, tous les calculs s'effectuent modulo n. La valeur n est donc également connue ou reçue par la cellule d'exécution de l'exponentiation.

Pour simplifier l'exposé de l'invention, on prendra pour exemple un calcul d'exponentiation avec les notations M^{e} mod n, sachant que le nombre M, l'exposant e et le modulo n peuvent former tout ou partie de n'importe quel nombre (par exemple M'), exposant (par exemple, d) et modulo, en relation ou non avec l'algorithme RSA.

La technique de carré et multiplication tire profit de l'expression binaire de l'exposant dans un calcul par des moyens électroniques ou informatiques. La variable e' sera considérée par la suite comme une succession de bits représentant initialement l'exposant e du calcul.

Le calcul de carré et multiplication s'effectue par itérations sur les variables T et R, le nombre d'itérations étant égal au nombre de bits (significatifs) de l'exposant e.

Avant chaque itération, la valeur courante de la variable e' est testée (bloc 22, e'=0 ?) pour déterminer si elle contient encore des bits significatifs (au moins encore un bit à 1). Si la variable e' est nulle (sortie Y du test 22), la variable résultat R fournit le résultat M^{e} de l'exponentiation. Sinon (sortie N du bloc 22), le calcul entre dans une boucle.

A chaque itération de cette boucle, le caractère pair ou impair de la valeur courante de la variable e' est testé (bloc 23, Is e' ODD ?). Si e' est impair (sortie Y du test 23), le contenu de la variable R est multiplié par le contenu de la variable T et le résultat devient la valeur courante de la variable R (bloc 24, R=R*T). Sinon (sortie N du bloc 23), la variable R n'est pas modifiée.

Le contenu de la variable e' est ensuite décalé vers la droite (bloc 25, Right SHIFT e'), ce qui revient à éliminer le bit de poids faible qui a conditionné le caractère pair ou impair lors du test 23 précédent. Dans l'exemple d'une représentation binaire de l'exposant, cela revient à diviser la variable e' par 2 (en partie entière). Selon les éléments matériels utilisés pour exécuter l'algorithme, l'étape de décalage vers la droite de la variable e' peut être effectuée par un registre à décalage ou être remplacée par des prises en compte successives des différents bits de l'exposant e.

Le contenu de la variable T est ensuite élevé au carré (bloc 27, T=T*T), ce qui revient à effectuer une autre opération de multiplication et le résultat devient la valeur courante de la variable T. L'itération est terminée. Le calcul reprend alors par le test 22 pour refaire une itération s'il reste des bits significatifs non traités de l'exposant.

Optionnellement, la valeur courante (comportant un bit représentatif de moins) de la variable e' est testée (bloc 26, e'= 0 ? en pointillés) préalablement à l'étape 27 pour vérifier s'il reste des bits significatifs. Dans l'affirmative (sortie N du test 26), on effectue le calcul 27. Sinon (sortie Y du bloc 26), la variable T n'est pas modifiée. Cette option permet d'économiser un calcul en fin d'algorithme.

Un inconvénient d'un calcul d'exponentiation tel que décrit en relation avec la figure 4 est qu'il est sensible à des attaques tendant à découvrir les quantités secrètes manipulées.

Un premier type d'attaques consiste à surveiller le temps d'exécution du calcul qui diffère, à chaque itération, selon le caractère pair ou impair de l'exposant courant e'. Or, ce caractère pair ou impair donne directement la valeur 0 ou 1 du bit de poids faible correspondant.

Une solution connue pour résoudre ce problème de durée d'exécution est d'introduire (bloc 28, D=R*T), en cas de test 23 négatif (bit de poids faible de la variable e' égal à 0), un calcul arbitraire ne servant pas au résultat.

Un tel calcul inutile n'est pas nécessaire pour compenser le calcul 27 en présence du test 26, car la seule itération dans laquelle le calcul 27 n'est pas exécuté est la dernière.

Même si on sait faire en sorte que le calcul prenne le même temps quelle que soit l'itération, ce calcul reste sensible à une autre catégorie d'attaques, dites par injection de fautes. Une attaque par injection de faute consiste à provoquer une perturbation dans le fonctionnement du circuit intégré lors de l'exécution du calcul (par exemple, au moyen d'un laser, d'une perturbation sur l'alimentation, etc.) et à interpréter le fonctionnement ultérieur du circuit pour tenter de découvrir les quantités secrètes (ici, l'exposant e).

Dans le cas d'un calcul de carré et multiplication, en perturbant l'opération de multiplication (bloc 24 ou bloc 28) dans une itération de l'algorithme, un pirate est en mesure de déterminer si le bit de poids faible de la valeur courante de l'exposant (e') est 0 ou 1. En effet, s'il s'agit d'un 0, le résultat final fourni par le calcul sera le même que sans perturbation, car la perturbation porte sur la multiplication du bloc 28 tandis que si le bit est à 1, le résultat final sera modifié car la perturbation porte sur la multiplication du bloc 24. En répétant ses injections de fautes à différents instants dans des exécutions successives du même calcul, il lui est alors possible de déduire tout ou partie de la clé (l'exposant), donc à tout le moins de réduire le nombre d'hypothèses à faire sur cette clé.

La figure 5 illustre, de façon très schématique et sous forme de blocs, un autre exemple d'application de l'invention à un algorithme de Diffie-Hellman sur courbe elliptique.

Un tel algorithme sert à créer une clé K partagée (par exemple une clé de session) pour un échange protégé entre deux systèmes ou circuits P1 et P2. Chaque circuit détient une clé privée respectivement a ou b et un élément G d'une courbe elliptique définissant, avec une loi de composition interne dite arbitrairement "addition", notée "(+)", un groupe abélien sur lequel s'effectue le calcul. L'élément G est connu et n'a pas besoin d'être protégé. Les clés privées a et b sont des nombres entiers exprimant le nombre de fois que la loi de composition du groupe est appliquée.

Une propriété d'une courbe elliptique est donc que, partant d'un point de la courbe, l'application un nombre entier de fois de la loi de composition notée addition donne un résultat encore situé sur la courbe. Par abus de langage et de façon arbitraire, on parle de "produit", noté "." pour désigner le nombre de fois que la loi de composition est appliquée.

Les courbes elliptiques sont utilisées en cryptographie pour le caractère asymétrique du calcul itératif, c'est-à-dire que connaissant un point de la courbe, il est facile d'obtenir un autre point de la courbe en appliquant un nombre entier de fois la loi de composition, mais que connaissant deux points de la courbe, il est difficile de retrouver le nombre entier (la clé) liant ces deux points.

Des exemples d'application des courbes elliptiques à la cryptographie sont décrits dans les normes : "Standards for Efficient Cryptography, sec 1: Elliptic Curve Cryptography" - Certicom Research - September 20, 2000, Version 1.0c ; "DSA on Elliptic Curves: ECDSA" - ISO/IEC 15946-2 ; et "Diffie-Hellman on Elliptic Curves: ECDH" - ISO/IEC 15946-3.

Chaque circuit P1, P2 calcule une clé publique, respectivement A, B comme étant le résultat du "produit" de sa clé privée a ou b et de l'élément G (bloc 163, A=a.G et bloc 165, B=b.G). Puis, chaque circuit envoie à l'autre sa clé publique. Enfin, chaque circuit P1, P2 calcule une clé K comme étant le "produit" de sa clé privée a ou b par la clé publique, respectivement B ou A, de l'autre circuit (bloc 164, K=a.B, bloc 166, K=b.A). Grâce aux propriétés de la loi de composition interne du groupe, les clés K sont identiques (K=a.b.G=b.a.G). La clé K peut donc être utilisée comme clé sécrète partagée par les deux circuits. Elle peut alors servir de clé de chiffrement (par exemple par un algorithme symétrique), d'authentification, etc. entre les circuits P1 et P2.

Comme pour une exponentiation, en raison de la taille des nombres manipulés, les applications successives de la loi de composition interne à partir d'un point d'une courbe elliptique sont calculées par une technique dite d'addition et doublement (add and double) qui exploite la représentation binaire (polynomiale) du nombre entier (a ou b) pour décomposer le calcul en une succession de doublements (application de la loi de composition à un point sur lui-même) et d'additions (application de la loi de composition à un résultat intermédiaire précédent).

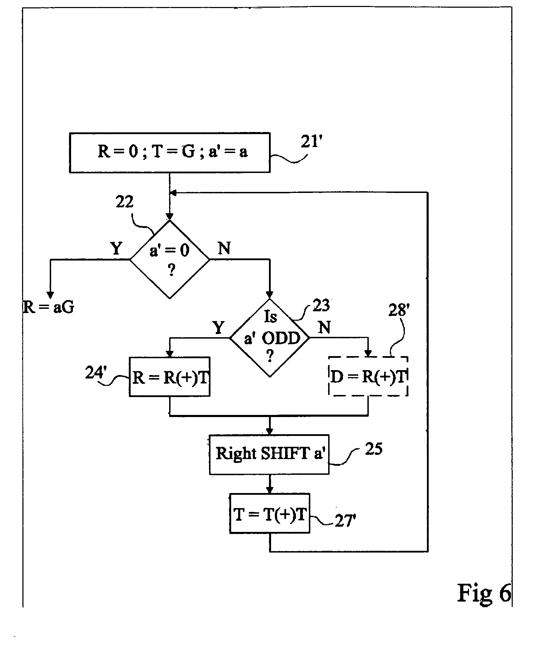

La figure 6 est un organigramme illustrant la technique d'addition et doublement, par exemple appliquée à un point G d'une courbe elliptique. Comme pour la figure 4, le calcul exposé sous forme d'organigramme en figure 6 est en pratique généralement effectué par une cellule matérielle (en logique câblée) mais peut également être mis en oeuvre de façon logicielle.

La technique d'addition et doublement exploite la même caractéristique de l'expression binaire du nombre entier que celle exploitée pour l'exposant dans l'exponentiation modulaire. En effet, le produit a.G peut s'écrire G (+) G (+) ... (+) G (a fois). En représentant a de façon binaire sur t bits, ce produit peut également s'écrire aₜ2^{t}G (+) aₜ₋₁2^{t-1} G (+) ... (+) a₁2¹G(+)a₀2⁰G, où le coefficient aᵢ du terme de degré i (i étant compris entre 0 et t) correspond au bit (valeur 0 ou 1) de poids i de l'expression binaire du nombre a.

Le calcul d'addition et doublement s'effectue alors par itérations sur des variables T et R, représentant respectivement une variable temporaire et la variable résultat, le nombre d'itérations étant égal au nombre t de bits (significatifs) du nombre a. Le calcul de la figure 6 est identique à celui de la figure 4 en :
initialisant (bloc 21', R=0 ; T=G; a'=a) les variables R, T et a', respectivement avec les valeurs 0 désignant l'élément neutre de la loi de composition interne (ici l'addition) sur le groupe (ici la courbe elliptique), G désignant l'élément du groupe (ici un point de la courbe elliptique) et a sous la forme d'une suite de coefficients d'un polynôme (ici une suite de bits) dont le degré significatif désigne le nombre d'itérations ;
remplaçant les multiplications * des blocs 24 et 27 (et si elle existe celle du bloc 28) par la loi de composition (+) (bloc 24', R=R(+)T, bloc 27', T=T(+)T et bloc 28', D=R (+) T) ; et
appliquant les étapes 22, 23 et 25 à la variable a'.

L'algorithme de la figure 6 présente les mêmes inconvénients de sensibilité à des attaques, notamment par injections de fautes, que l'algorithme de carré et multiplication.

Plus généralement, des problèmes similaires peuvent se poser pour tout calcul, par un circuit électronique, d'un nombre entier d'applications d'une loi de composition interne sur des éléments d'un groupe abélien, par itérations successives d'étapes différentes selon le caractère pair ou impair d'un coefficient courant d'une représentation polynomiale dudit nombre entier dont le degré détermine le nombre d'itérations.

Dans le cas de l'exponentiation, l'exposant est l'entier et la loi de composition ou opération interne du groupe abélien est la multiplication.

Le document WO-A-02/099624 décrit un calcul d'exponentiation modulaire à partir de deux variables avec des itérations successives d'étapes différentes selon le caractère pair ou impair des bits de l'exposant de l'exponentiation modulaire.

Le document WO 99/67909 décrit un procédé et un dispositif de calcul d'exponentiations modulaires.

Le document WO 00/25204 décrit un procédé de calcul d'un multiple d'un point sur une courbe elliptique selon le préambule de la revendication 1.

### Résumé de l'invention

La présente invention vise à pallier tout ou partie des inconvénients des algorithmes connus de calcul par itérations successives sur un groupe exécutés par un circuit électronique.

L'invention vise plus particulièrement à proposer un mode de calcul qui soit résistant à d'éventuelles attaques, notamment, par injection de fautes dans le circuit électronique exécutant le calcul.

L'invention vise également une solution qui ne nuise pas à la rapidité d'exécution des calculs.

Selon un objet, la présente invention vise plus particulièrement les exponentiations d'un élément d'un groupe par la méthode de carré et multiplication.

Selon un autre objet, la présente invention vise plus particulièrement les calculs par application de la méthode d'addition et doublement. L'invention concerne un procédé selon la revendication 1. Des modes de mise en oeuvre préférés sont décrits dans les revendications dépendantes.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon très schématique, un exemple de carte à puce du type auquel s'applique à titre d'exemple la présente invention ;
la figure 2 qui a été décrite précédemment représente, de façon très schématique et sous forme de blocs, un exemple classique de microcontrôleur pourvu d'une cellule matérielle de calcul cryptographique du type auquel s'applique à titre d'exemple la présente invention ;
la figure 3 qui a été décrite précédemment illustre, de façon très schématique et sous forme de blocs, l'exécution d'un chiffrement-déchiffrement par un algorithme RSA auquel s'applique à titre d'exemple la présente invention ;
la figure 4 qui a été décrite précédemment est un organigramme d'un exemple classique de calcul d'exponentiation par la méthode de carré et multiplication ;
la figure 5 qui a été décrite précédemment illustre, de façon très schématique et sous forme de blocs, l'exécution d'un protocole de Diffie-Hellman sur courbe elliptique auquel s'applique à titre d'exemple la présente invention ;
la figure 6 qui a été décrite précédemment est un organigramme d'un exemple classique de calcul par la méthode d'addition et doublement ;
la figure 7 est un organigramme illustrant un exemple d'un procédé appliqué à un calcul d'exponentiation ;
la figure 8 est un organigramme illustrant ce procédé appliqué à un calcul d'addition et doublement ;
la figure 9 est un organigramme illustrant le premier mode de mise en oeuvre de l'invention appliqué à un calcul d'exponentiation ;
la figure 10 est un organigramme illustrant un deuxième mode de mise en oeuvre de l'invention appliqué à un calcul d'exponentiation ; et
la figure 11 est un organigramme illustrant le deuxième mode de mise en oeuvre de l'invention appliqué à un calcul d'addition et doublement.

De mêmes éléments ont été désignés par de mêmes références aux différentes figures. Par souci de clarté, seuls les étapes et éléments qui sont utiles à la compréhension de l'invention ont été représentés aux figures et seront décrits par la suite. En particulier, les éléments matériels (registres, opérateurs, etc.) utilisés pour la mise en oeuvre de l'invention au moyen d'un circuit intégré n'ont pas été détaillés, l'invention étant compatible avec les éléments utilisés pour la mise en oeuvre des algorithmes classiques.

### Description détaillée

La présente invention sera décrite par la suite en relation avec deux exemples d'application respectivement à un calcul d'exponentiation par la méthode du carré et multiplication et à un calcul itératif par la méthode d'addition et doublement. On notera toutefois qu'elle s'applique plus généralement à tout calcul (arbitrairement noté "."), par un circuit électronique, d'un résultat d'un nombre entier d'applications d'une loi de composition interne (arbitrairement notée (+)) sur des éléments d'un groupe, pourvu que le calcul se décompose en plusieurs itérations d'étapes appliquant la loi de composition sur des variables représentant des éléments du groupe et que les étapes soient différentes selon le caractère pair ou impair d'un coefficient courant d'une représentation polynomiale du nombre entier dont le degré significatif détermine le nombre d'itérations.

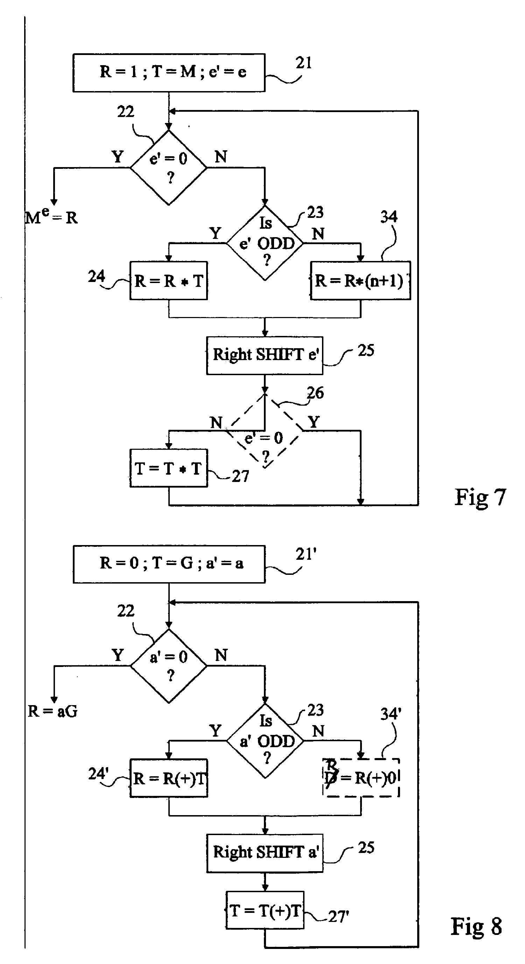

La figure 7 est un organigramme illustrant un exemple d'un procédé, appliqué à un calcul d'exponentiation.

Comme précédemment, une première étape (bloc 21, R=1 ; T=M ; e'=e) comporte l'initialisation d'une variable résultat R à l'unité (élément neutre de la loi de composition - ici la multiplication - du groupe), d'une variable temporaire T avec la valeur M (élément du groupe) à soumettre à l'exponentiation, et d'une variable d'exposant e' avec les coefficients d'une représentation polynomiale (binaire) de l'exposant e (nombre entier de fois que devrait être appliquée la multiplication). Dans le cas d'une exponentiation modulaire, tous les calculs qui seront exposés s'effectuent modulo n, dont la valeur est alors connue ou reçue par la cellule d'exécution de l'algorithme.

Toujours comme précédemment, le calcul s'effectue par itérations au moins sur les variables T et R. La valeur courante de la variable e' est, avant chaque itération, testée (bloc 22, e'=0 ?) pour déterminer si elle contient encore des bits (coefficients de l'expression polynomiale du nombre entier) significatifs. Dans la négative (sortie Y du bloc 22), la variable R contient le résultat M^{e} de l'exponentiation. Sinon, le caractère pair ou impair de la variable e' (bloc 23, Is e' ODD ?) ou la valeur 0 ou 1 de son bit de poids faible est testé. Si e' est impair (bit de poids faible à 1), le contenu de la variable R est multiplié (loi de composition ou opération du groupe) par le contenu de la variable T (bloc 24, R=R*T) avant de décaler d'un rang (bloc 25, Right SHIFT e') les bits de la valeur courante de la variable e' vers la droite pour éliminer le bit de poids le plus faible (coefficient du terme de degré minimal de l'expression polynomiale du nombre e). Le contenu de la variable T est alors multiplié par lui-même (bloc 27, T=T*T). L'itération est alors terminée (retour en entrée du bloc 22).

Comme précédemment, un test (bloc 26, e'=0 ? en pointillés) peut optionnellement être prévu sur la variable e' avant l'étape 27 pour éviter l'opération de cette étape à la dernière itération (sortie Y du bloc 26).

Selon le procédé appliqué à une exponentiation modulaire, si la variable e' est paire, (sortie N, du bloc 23), le contenu de la variable R est soumis à une multiplication par n+1 1 (bloc 34, R=R*(n+1)), où n représente la valeur du modulo de l'exponentiation modulaire. Comme tous les calculs s'effectuent modulo n, une multiplication par la valeur n+1 revient, dans un calcul binaire, à ne pas modifier l'opérande.

En variante (notamment dans le cas d'une exponentiation simple - non modulaire), l'étape du bloc 34 peut être remplacée par une multiplication de la variable R par l'unité (l'élément neutre de l'opération du groupe abélien).

Un avantage de ce procédé est qu'en cas de perturbation suite à une attaque par injection de fautes, le résultat fourni en sortie de l'algorithme (sortie Y du bloc 22) sera modifié par la perturbation du calcul du bloc 24 ou du bloc 34.

De plus, ce procédé respecte des durées d'exécution identiques quel que soit le bit de poids faible courant de la variable e'.

La figure 8 est un organigramme illustrant l'application de ce procédé à un calcul sur une courbe elliptique, en utilisant une méthode d'addition et doublement.

Le calcul de la figure 8 est similaire à celui de la figure 7 en :
initialisant (bloc 21', R=0 ; T=G; a'=a) les variables R, T et a', respectivement avec les valeurs 0 désignant l'élément neutre de la loi de composition (noté ici addition (+)) sur le groupe (ici la courbe elliptique), G désignant l'élément du groupe (ici le point de la courbe elliptique) et avec une suite de coefficients (ici une suite de bits) d'une représentation polynomiale d'un nombre entier a désignant le nombre de fois que la loi de composition devrait être appliquée ;
remplaçant les multiplications des blocs 24, 27 et 34 par des "additions" (bloc 24', R=R (+) T, bloc 27', T=T (+) T et bloc 28', R=R(+)0) ; et
appliquant les étapes 22, 23 et 25 à la variable a'.

Dans l'exemple de la figure 8, si l'on suppose un calcul modulo n, l'étape 34' peut être remplacée par l'addition du modulo au résultat intermédiaire R, ce qui n'en modifie pas le contenu. En figure 8, le test 26 a été supprimé.

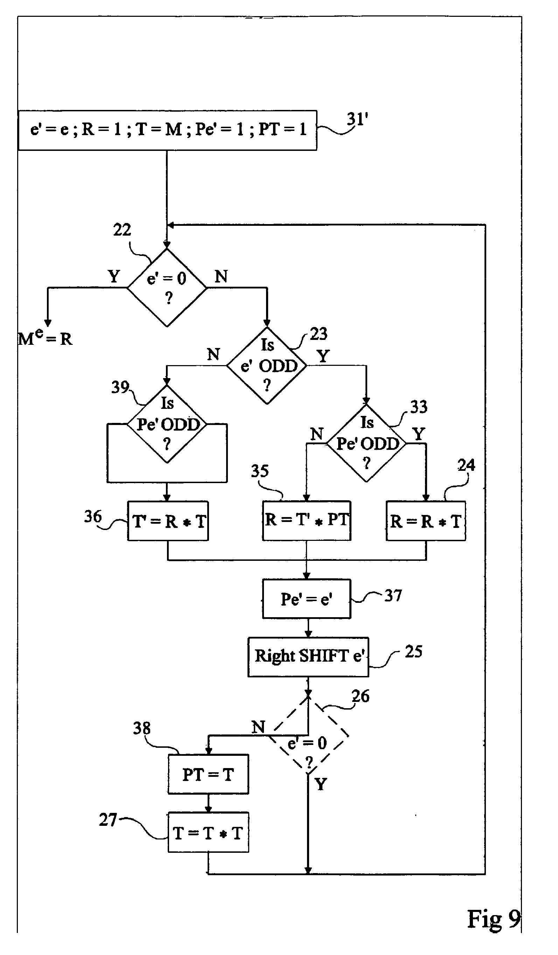

La figure 9 est un organigramme illustrant un premier mode de mise en oeuvre du procédé selon la présente invention, appliqué à un calcul d'exponentiation.

Par rapport au procédé précédent (figure 7), au moins deux variables supplémentaires Pe' et PT sont initialisées à l'unité (bloc 31, e'=e ; R=1 ; T=M ; Pe'=1 ; PT=1) et une variable T' est non nécessairement initialisée (à une valeur quelconque). La variable Pe' contient la valeur de la variable e' à l'itération précédente. La variable PT contient la valeur prise par la variable T à l'itération précédente et la variable T' contient une valeur participant à la propagation d'une éventuelle erreur en cas d'attaque.

Tant qu'il reste des bits significatifs non traités de l'exposant (test 22, e'=0 ?), les opérations suivantes sont effectuées en boucle.

Si le bit de poids faible de la variable e' est pair (sortie N du test 23), la variable T' est mise à jour par la valeur R*T (bloc 36, T'=R*T). Sinon (sortie Y du bloc 23), la variable R est mise à jour en fonction de la valeur du bit de poids faible de la variable e' à l'itération précédente (bloc 33, Is Pe' ODD ?). Si la variable Pe' est impaire (sortie Y du bloc 33), la variable R prend la valeur R^{*}T (bloc 24). Sinon (sortie N du bloc 33), elle prend la valeur T'^{*}PT (bloc 35, R=T'^{*}PT).

Les étapes 23, 24, 33, 35, et 36 reviennent à décaler à l'itération suivante la multiplication du contenu de la variable T par la variable R. Par conséquent, en cas d'injection de faute, non seulement la perturbation agit sur le résultat, mais il n'y a pas de relation entre l'itération qui n'a pas eu lieu en raison de la perturbation et le bit courant de l'exposant. En outre, l'erreur dans le résultat introduite par la contre-mesure de l'invention se propage aux itérations ultérieures.

Par la suite, la variable Pe' est mise à jour (bloc 37, Pe'=e') avec la valeur courante de la variable e'. Puis, la variable e' subit le décalage d'un bit vers la droite (bloc 25).

La variable PT est mise à jour (bloc 38, PT=T). Puis, la variable T est mise à jour par le résultat de la multiplication T*T (bloc 27) avant de passer à l'itération suivante (retour en entrée du test 22).

En variante, les étapes 38 et 22 ne sont pas effectuées à la dernière itération (test 26 en pointillés).

De préférence, pour équilibrer le temps d'exécution et la signature électrique, un test (bloc 39 en pointillés, Is Pe' ODD ?) identique au test 33 est effectué même en cas de bit de poids faible courant pair. L'opération 36 est alors effectuée quel que soit le résultat du test 39.

Un avantage du mode de réalisation de la figure 9 est qu'il résout à la fois le problème de respect du temps d'exécution des calculs et améliore le masquage contre d'éventuelles injections de fautes.

Ce mode de réalisation est également applicable à la méthode d'addition et doublement en remplaçant les multiplications (blocs 24, 27, 35 et 36) par des additions et en initialisant les variables PT et Pe' avec l'élément neutre de l'addition (plus généralement de la loi de composition utilisée).

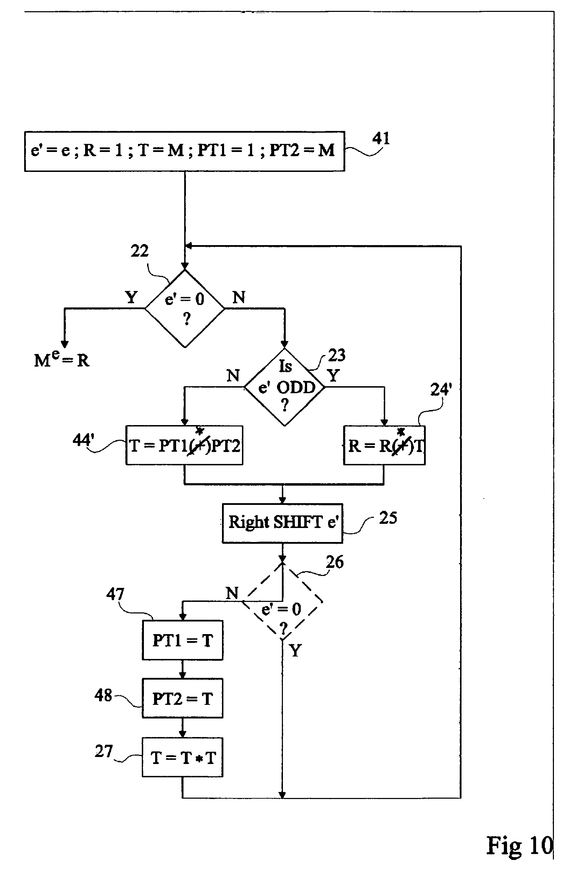

La figure 10 est un organigramme illustrant un deuxième mode de mise en oeuvre préféré de la présente invention, appliqué au carré et multiplication.

La différence par rapport au mode de réalisation de la figure 9 est d'intervenir sur la variable T plutôt que sur la variable résultat R. Ainsi, deux variables temporaires PT1 et PT2 sont initialisées, respectivement avec la valeur 1 et avec la valeur M (bloc 41, e'=e ; R=1 ; T=M ; PT1=1 ; PT2=M). Ces deux variables PT1 et PT2 contiennent par la suite, toutes les deux, la valeur de la variable T de l'itération précédente. Le test 23 sur le caractère pair ou impair de la variable courante e' conduit, si e' est impair, au calcul 24 de mise à jour de la variable R par le résultat de la multiplication R*T. Sinon, la variable T est mise à jour (bloc 44, T=PT1*PT2) par le résultat de la multiplication des deux variables PT1 et PT2. Après le décalage vers la droite (bloc 25) de la variable d'exposant e', les variables PT1 et PT2 sont mises à jour (blocs 47, PT1=T et 48 PT2=T) par la valeur courante de la variable T, avant la mise à jour de cette variable T par son élévation au carré (bloc 27).

Un avantage de ce mode de réalisation est qu'il économise la prise en compte d'une variable (T') par rapport au mode de réalisation précédent. Un autre avantage est qu'il améliore le masquage du calcul. En particulier, si plusieurs bits sont à zéro dans l'exposant e, on risque dans le mode de réalisation de la figure 9 de ne masquer que les bits de poids faibles les plus significatifs consécutifs (si plusieurs bits consécutifs sont à 0, seul celui le plus à gauche dans le mot sera masqué).

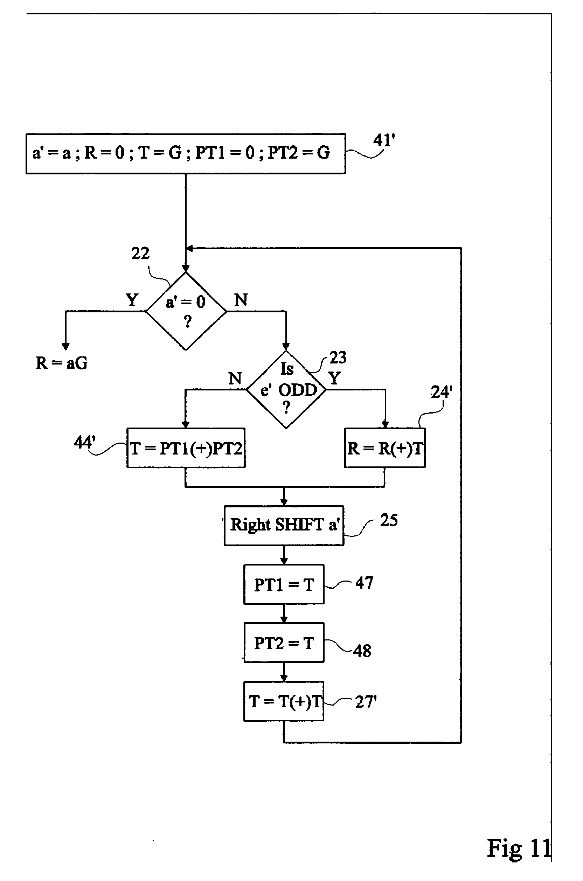

La figure 11 est un organigramme illustrant l'application du deuxième mode de mise en oeuvre de l'invention à la méthode d'addition et doublement.

Le calcul de la figure 11 est similaire à celui de la figure 10 en :
initialisant (bloc 41', a'=a ; R=0 ; T=G ; PT1=0 ; PT2=G) les variables a', R, T, PT1 et PT2, respectivement avec les valeurs a, 0, G, 0 et G ;
remplaçant les multiplications des blocs 24, 27 et 44 par des additions (bloc 24', R=R (+) T ; bloc 27', T=T (+) T ; et bloc 44', T=PT1(+)PT2) ; et
appliquant les étapes 22, 23 et 25 à la variable a'.

Dans l'exemple de la figure 11, le test 26 a été supprimé.

Bien entendu, la présente invention est susceptible de diverses variantes et modifications qui apparaîtront à l'homme de l'art. En particulier, l'invention s'applique quelle que soit la taille des nombres manipulés.

De plus, la mise en oeuvre pratique de l'invention à partir des indications fonctionnelles données ci-dessus est à la portée de l'homme du métier en utilisant des outils matériels et/ou logiciels disponibles. En particulier, une réalisation matérielle à partir de registres ou autre circuits de mémorisation, d'opérateurs divers, de comparateurs d'états de bits, etc. reprend des éléments usuels.

En outre, la transposition des modes de réalisation de l'invention à d'autres lois de composition sur d'autres groupes est à la portée de l'homme du métier.

## Revendications

1. Procédé de calcul cryptographique, par un circuit électronique, d'un résultat d'un nombre entier (e ; a) d'applications d'une loi de composition interne (* ; (+)) sur des éléments d'un groupe abélien, comportant des itérations successives d'étapes différentes selon le caractère pair ou impair d'un coefficient courant représenté en binaire d'une représentation polynomiale dudit nombre entier dont le degré détermine le nombre d'itérations, le nombre d'étapes étant indépendant du caractère pair ou impair du coefficient courant et chaque itération comportant, quel que soit le caractère pair ou impair du coefficient courant, une étape de mise à jour d'au moins une variable (R ; R, T' ; R, T) conditionnant le résultat final (R) du calcul, **caractérisé en ce qu'**au moins deux variables temporaires (Pe', PT ; PT1, PT2) représentant le contenu d'au moins une variable (e', T ; T) d'une itération précédente sont exploitées pour décaler temporellement une mise à jour d'une variable (R ; T) de l'itération courante.

2. Procédé selon la revendication 1, exécutant, tant que tous les coefficients significatifs de la représentation polynomiale (e' ; a') du nombre entier (e ; a) n'ont pas été traités, les opérations suivantes :
si le coefficient courant est pair : T'=R(+)T ;
sinon, si le coefficient de l'itération précédente était pair : R=PT(+)T', s'il était impair : R=R(+)T ; et
dans tous les cas : PT=T, puis T=T(+)T,
où (+) désigne ladite loi de composition (* ; (+)), R est une variable initialisée avec l'élément neutre (1 ; 0) de la loi de composition pour contenir le résultat final, T est une première variable temporaire initialisée avec la valeur (M, G) de l'élément à soumettre au calcul, et T' et PT sont deux autres variables temporaires parmi lesquelles au moins PT est initialisée avec l'élément neutre de la loi de composition.

3. Procédé selon la revendication 1, exécutant tant que tous les coefficients significatifs de la représentation polynomiale (e' ; a') du nombre entier (e ; a) n'ont pas été traités, les opérations suivantes :
si le coefficient courant est pair : T=PT1(+)PT2, sinon R=R (+) T ; et
dans tous les cas : PT1=T, PT2=T, puis T=T(+)T,
où (+) désigne ladite loi de composition (* ; (+)), R est une variable initialisée avec l'élément neutre (1 ; 0) de la loi de composition pour contenir le résultat final, T et PT2 sont deux variables temporaires initialisées avec la valeur (M, G) de l'élément à soumettre au calcul, et PT1 est une autre variable temporaire initialisée avec l'élément neutre de la loi de composition.

4. Procédé de protection d'un nombre (e ; a) représentant un nombre d'applications d'une loi de composition (* ; (+)) d'un groupe abélien sur des éléments (M ; G) du groupe contre un éventuel piratage, **caractérisé en ce qu'**il applique le procédé conforme à l'une quelconque des revendications 1 à 3.

5. Procédé selon l'une quelconque des revendications 1 à 4, appliqué au calcul d'une exponentiation, dans lequel :
ledit élément (M) est un nombre ;
ladite loi de composition interne est une opération de multiplication (*) ; et
ledit nombre entier est l'exposant (e).

6. Procédé de chiffrement ou déchiffrement selon l'algorithme RSA, **caractérisé en ce qu'**il met en oeuvre au moins un calcul conforme à la revendication 5.

7. Procédé selon l'une quelconque des revendications 1 à 4, dans lequel ledit élément (G) est un point d'une courbe elliptique.

8. Procédé selon l'une quelconque des revendications 1 à 7, dans lequel les variables sont contenues dans des registres du circuit électronique.

9. Cellule de calcul comportant des moyens pour la mise en oeuvre du procédé selon l'une quelconque des revendications 1 à 8.

10. Circuit intégré comportant une cellule de calcul conforme à la revendication 9.

## Claims

1. A method of cryptographic calculation, by an electronic circuit, of a result of an integral number (e; a) of applications of an internal composition law (*; (+)) on elements of an abelian group, comprising successive iterations of different steps according to the even or odd character of a binary-expressed current coefficient of a polynomial representation of said integer, the degree of which determines the number of iterations, the number of steps being independent of the even or odd character of the current coefficient and each iteration comprising, whatever the even or odd character of the current coefficient, a step of updating of at least one variable (R; R, T'; R, T) conditioning the final calculation result (R), **characterized in that** at least two temporary variables (Pe', PT; PT1, PT2) representing the content of at least one variable (e', T; T) of a preceding iteration are exploited to shift in time an updating of a variable (R; T) of the current iteration.

2. The method of claim 1, executing, as long as all the significant coefficients of the polynomial representation (e'; a') of the integer (e; a) have not been processed, the following operations:
if the current coefficient is even: T'=R(+)T;
otherwise, if the coefficient of the preceding iteration was even: R=PT(+)T', if it was odd: R=R(+)T; and
in all cases: PT=T, then T=T(+)T,
where (+) designates said composition law (*; (+)), R is a variable initialized with the neutral element (1; 0) of the composition law to contain the final result, T is a first time variable initialized with the value (M, G) of the element to be submitted to the calculation, and T' and PT are two other temporary variables among which at least PT is initialized with the neutral element of the composition law.

3. The method of claim 1, executing as long as all the significant coefficients of the polynomial representation (e'; a') of the integer (e; a) have not been processed, the following operations:
if the current coefficient is even: T=PT1(+)PT2, otherwise R=R(+)T; and
in all cases: PT1=T, PT2=T, then T=T(+)T,
where (+) designates said composition law (*; (+)), R is a variable initialized with the neutral element (1; 0) of the composition law to contain the final result, T and PT2 are two temporary variables initialized with the value (M, G) of the element to be submitted to the calculation, and PT1 is another temporary variable initialized with the neutral element of the composition law.

4. A method for protecting a number (e; a) representing a number of applications of a composition law (*; (+) ) of an abelian group on elements (M; G) of the group against a possible hacking, applying the method of any of claims 1 to 3.

5. The method of any of claims 1 to 4, applied to the calculation of an exponentiation, wherein:
said element (M) is a number;
said internal composition law is a multiplication operation (*); and
said integer is the exponent (e).

6. A ciphering or deciphering method according to the RSA algorithm, implementing at least one calculation of claim 5.

7. The method of any of claims 1 to 4, wherein said element (G) is a point of an elliptic curve.

8. The method of any of claims 1 to 7, wherein the variables are contained in registers of the electronic circuit.

9. A calculation cell comprising means for implementing the method of any of claims 1 to 8.

10. An integrated circuit comprising the calculation cell of claim 9.

## Patentansprüche

1. Verfahren für eine kryptographische Berechnung mittels eines elektronischen Schaltkreises eines Ergebnisses einer ganzen Zahl (e; a) von Anwendungen eines internen Verknüpfungsgesetzes (*; (+)) auf Elemente einer Abelschen Gruppe, das aufeinanderfolgende Iterationen unterschiedlicher Schritte aufweist, entsprechend der Gleich- oder Ungleichartigkeit eines binär ausgedrückten aktuellen Koeffizienten einer Polynomdarstellung der Ganzzahl, wobei der Grad derselben die Anzahl der Iterationen und die Anzahl von Schritten, die unabhängig von der Gleich- oder Ungleichartigkeit des aktuellen Koeffizienten sind, bestimmt, und wobei jede Iteration, unabhängig von der Gleich- oder Ungleichartigkeit des aktuellen Koeffizienten, ferner einen Aktualisierungsschritt von wenigstens einer Variablen (R; R, T'; R, T) aufweist, die das endgültige Berechnungsergebnis (R) bestimmt, **dadurch gekennzeichnet, dass** wenigstens zwei temporäre Variablen (Pe', PT; PT1, PT2), die den Inhalt wenigstens einer Variablen (e', T; T) einer vorangegangenen Iteration repräsentieren, ausgenutzt werden, um das Aktualisieren einer Variablen (R; T) der aktuellen Iteration in der Zeit zu verschieben.

2. Verfahren nach Anspruch 1, wobei, so lange nicht alle signifikanten Koeffizienten der Polynomdarstellung (e'; a') der Ganzzahl (e; a) prozessiert sind, die folgenden Operationen ausgeführt werden:
ist der aktuelle Koeffizient gerade: T'=R(+)T;
andernfalls, wenn der Koeffizient der vorangegangenen Iteration gerade war: R=PT(+)T', wenn er ungerade war: R=R(+)T; und
in allen Fällen: PT=T, gilt T=T(+)T,
wobei (+) das Verknüpfungsgesetz (*; (+)) bezeichnet, wobei R eine mit dem neutralen Element (1; 0) des Verknüpfungsgesetzes initialisierte Variable ist, um das Endergebnis zu enthalten, T eine erstmalige Variable, die mit dem Wert (M, G) des Elements das an die Berechnung übergeben werden soll initialisiert ist, und T' und PT zwei weitere temporäre Variablen sind unter denen wenigstens PT mit dem neutralen Element des Verknüpfungsgesetzes initialisiert ist.

3. Verfahren nach Anspruch 1, wobei, so lange nicht alle signifikanten Koeffizienten der Polynomdarstellung (e'; a') der Ganzzahl (e; a) prozessiert sind, die folgenden Operationen ausgeführt werden:
ist der aktuelle Koeffizient gerade: T=PT1 (+)PT2;
andernfalls R=R(+)T; und
in allen Fällen: PT1=T, PT2=T, gilt T=T(+)T,
wobei (+) das Verknüpfungsgesetz (*; (+)) bezeichnet, wobei R eine mit dem neutralen Element (1; 0) des Verknüpfungsgesetzes initialisierte Variable ist, um das Endergebnis zu enthalten, T und PT2 sind zwei temporäre Variablen, die mit dem Wert (M, G) des Elements das an die Berechnung übergeben werden soll initialisiert sind, und PT1 ist eine weitere temporäre Variable, die mit dem neutralen Element des Verknüpfungsgesetzes initialisiert ist.

4. Verfahren zum Schutz einer Zahl (e; a) gegen mögliches Hacken, die eine Anzahl von Anwendungen eines Verknüpfungsgesetzes (*; (+)) einer Abelschen Gruppe von Elementen (M; G) der Gruppe repräsentiert, das das Verfahren nach den Ansprüchen 1 bis 3 anwendet.

5. Verfahren nach einem der Ansprüche 1 bis 4, angewendet auf die Berechnung einer Exponierung, wobei:
das Element (M) eine Zahl ist;
das interne Verknüpfungsgesetz eine Multiplikationsoperation (*) ist; und
die Ganzzahl der Exponent (e) ist.

6. Chiffrier- oder Dechiffrierverfahren gemäß dem RSA Algorithmus, das wenigstens eine Berechnung nach Anspruch 5 implementiert.

7. Verfahren nach einem der Ansprüche 1 bis 4, wobei das Element (G) ein Punkt einer elliptischen Kurve ist.

8. Verfahren nach einem der Ansprüche 1 bis 7, wobei die Variablen in Registern des elektronischen Schaltkreises enthalten sind.

9. Berechnungszelle, die Mittel zum Implementieren des Verfahrens nach den Ansprüchen 1 bis 8 aufweist.

10. Integrierter Schaltkreis, der die Berechnungszelle nach Anspruch 9 aufweist.
